(19) Europäisches Patentamt
European Patent Office
Office européen des brevets

(11) **EP 3 325 936 B1**

(12) **FASCICULE DE BREVET EUROPEEN**

(45) Date de publication et mention de la délivrance du brevet:
**10.03.2021 Bulletin 2021/10**

(21) Numéro de dépôt: **16741578.5**

(22) Date de dépôt: **12.07.2016**

(51) Int Cl.:
**G01M 9/06** *(2006.01)*     **G01M 9/08** *(2006.01)*
**G01B 11/25** *(2006.01)*    **G06F 17/00** *(2019.01)*
**G06T 7/00** *(2017.01)*

(86) Numéro de dépôt international:
**PCT/EP2016/066531**

(87) Numéro de publication internationale:
**WO 2017/012923 (26.01.2017 Gazette 2017/04)**

(54) **PROCEDE ET SYSTEME DE DETERMINATION DE LA RESISTANCE AERODYNAMIQUE D'UN CYCLISTE**

VERFAHREN UND SYSTEM ZUR BESTIMMUNG DES AERODYNAMISCHEN WIDERSTANDS EINES RADFAHRERS

METHOD AND SYSTEM FOR DETERMINING THE AERODYNAMIC RESISTANCE OF A CYCLIST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2015 FR 1556815**

(43) Date de publication de la demande:
**30.05.2018 Bulletin 2018/22**

(73) Titulaire: **Apeira Technologies**
**71200 Le Creusot (FR)**

(72) Inventeurs:
• **VOIRY, Matthieu**
**92270 Bois-Colombes (FR)**
• **LEMAITRE, Cédric**
**71210 Saint-Julien-sur-Dheune (FR)**

(74) Mandataire: **Heiblig, Loïs**
**Germain & Maureau**
**12, rue Boileau**
**69006 Lyon (FR)**

(56) Documents cités:
**JP-A- 2011 075 515     US-A1- 2007 095 135**
**US-B1- 7 997 130**

• **DEFRAEYE T ET AL: "Aerodynamic study of different cyclist positions: CFD analysis and full-scale wind-tunnel tests", JOURNAL OF BIOMECHANICS, PERGAMON PRESS, NEW YORK, NY, US, vol. 43, no. 7, 7 mai 2010 (2010-05-07), pages 1262-1268, XP027013711, ISSN: 0021-9290 [extrait le 2010-02-20] cité dans la demande**

**Description**

**Domaine technique**

La présente invention concerne un procédé et un système de détermination de la résistance aérodynamique d'un objet et/ou d'une personne en mouvement. Plus particulièrement, l'invention concerne un procédé et un système de détermination de la résistance aérodynamique d'un cycliste. Elle lui permettra d'améliorer ses performances en adaptant sa position sur le vélo pour minimiser ladite résistance aérodynamique.

**Etat de la technique**

Il est bien connu que la résistance aérodynamique est composée de deux forces, à savoir la force de traînée et la force de portance. En matière de cyclisme par exemple, au vu des vitesses de déplacement, la force de portance est considérée comme négligeable de sorte que l'on assimile donc la résistance aérodynamique à la traînée.

De manière bien connue en soi, la force de traînée est donnée par l'équation suivante :

$$R_A = 0.5\rho A_p C_d V_f^2$$

où Ap désigne l'aire frontale projetée du cycliste et de sa bicyclette, Cd le coefficient de traînée, $\rho$ la masse volumique de l'air et Vf la vitesse d'écoulement du fluide sur le corps du cycliste.

Dans le cadre d'une étude aérodynamique, la quantité que l'on cherche à minimiser est l'aire frontale effective donnée par l'équation suivante :

$$A_p C_d = \frac{R_A}{0.5\rho V_f^2}$$

Afin de déterminer l'aire frontale effective, il est donc nécessaire de connaître la force de traînée $R_A$. On notera que l'aire frontale effective n'est pas une constante mais évolue légèrement avec la vitesse de déplacement.

Afin d'évaluer l'aire frontale effective d'un cycliste, plusieurs procédés sont bien connus, ces différentes méthodes étant décrites dans la publication de Vincent Chabroux « Approche aérodynamique et biomécanique de l'amélioration des performances de cyclistes en course contre la montre » PhD thesis, Université de la Méditerranée, 2010 et dans la publication de F. Grappe. « Cyclisme et optimisation de la performance : sciences et méthodologie de l'entraînement. » Sciences et pratiques du sport, De Boeck, 2005.

Pour l'essentiel, ces procédés peuvent être classés en quatre groupes, l'analyse de puissance mécanique, la mesure par remorquage, la méthode par décélération et la mesure en soufflerie.

L'analyse de la puissance mécanique consiste à mesurer la puissance délivrée par le cycliste grâce à un wattmètre à différentes vitesses puis à évaluer la force de trainée au moyen d'une régression linéaire à partir desdites mesures de la puissance délivrée. Cette méthode est relativement précise mais nécessite plusieurs essais en conditions réelles.

La mesure par remorquage consiste à mesurer les forces de traction en remorquant un cycliste sur sa bicyclette avec une voiture à vitesse constante. Cette méthode est assez contraignante et manque de précision à cause des turbulences provoquées par le véhicule remorqueur.

La méthode par décélération consiste à mesurer la décélération du cycliste à différentes vitesses. Ainsi, en utilisant les lois de Newton, on calcule la force de traînée. Cette méthode est très lourde à mettre en place et nécessite que le cycliste soit immobile.

Les mesures en soufflerie consistent à générer un flux d'air sur l'ensemble cycliste/bicyclette et à quantifier les forces de réaction au sol grâce à une plate-forme de force. Cette méthode, bien que la plus précise, est aussi la plus coûteuse.

On notera qu'en matière d'aérodynamisme, il est bien connu de déterminer des caractéristiques aérodynamiques et/ou mécaniques, telles que la déformation d'un objet ou la traînée d'un objet, par exemple, par des tests en soufflerie. C'est le cas, notamment, des documents US 7,997,130 et US 2007/095135.

Le document US 7,997,130 décrit un système et un procédé pour mesurer la déformation d'un objet, tel qu'un avion de chasse par exemple, positionné dans un tunnel d'une soufflerie. L'objet est positionné dans le tunnel d'une soufflerie et un système d'acquisition d'un nuage de points représentant au moins une surface de l'objet est enregistré. L'objet est déplacé dans le flux du tunnel de la soufflerie et des nuages de points de la surface de l'objet sont également acquis au cours dudit déplacement afin de déterminer au moyen d'un système informatique, recevant les données relatives aux nuages de points, au moins la position de l'objet, son orientation et la déformation de la surface de l'objet.

Le document US 2007/095135 décrit un procédé de détermination de la traînée d'un aéronef comprenant la fourniture d'un modèle de l'aéronef, qui est positionné dans un tunnel d'une soufflerie dans une orientation initiale déterminée, et une pluralité de capteurs d'orientation et d'inclinaison montés sur ledit modèle. Le modèle est ensuite déplacé dans le flux du tunnel de soufflerie depuis son orientation initiale vers une seconde orientation afin de déterminer la traînée de l'aéronef dans les différentes orientations possibles de ce dernier.

Toutefois, outre le fait que ces méthodes soient particulièrement couteuses compte tenu de la nécessité d'utiliser un tunnel de soufflerie, elles ne sont pas adaptées pour déterminer la résistance aérodynamique d'un cycliste notamment.

Récemment, une nouvelle méthode de mesure de la résistance aérodynamique a été proposée. Cette méthode est notamment décrite dans les publications de T. Defraeye, B. Blocken, E. Koninckx, P. Hespel, and J. Carmeliet. « Aerodynamic study of différent cyclist positions : CFD analysis and full-scale wind-tunnel tests. » J Biomech, 43(7) : 1262-1268, May 2010 et Peter Nicholas Doval. « Aerodynamic Analysis and Drag Coefficient Evaluation of Time-Trial Bicycle Riders. » PhD thesis, University of Wisconsin-Milwaukee, 2012.

Cette méthode consiste à coupler un modèle 3D du cycliste et de sa bicyclette obtenu grâce à un scanner avec un code de calcul numérique de dynamique des fluides. Cette méthode permet d'obtenir des traînées aérodynamiques en accord avec celles mesurées en soufflerie. Elle présente l'avantage d'être réalisée à moindre coût et sans nécessité de se placer dans des conditions réelles. Toutefois, son principal inconvénient est qu'elle utilise un modèle statique qui n'est pas représentatif d'un cycliste en train de pédaler.

## Divulguation de l'invention

L'un des buts de l'invention est donc de remédier à ces inconvénients en procurant un procédé et un système de détermination de la résistance aérodynamique d'un objet ou d'une personne en mouvement de conception simple et peu onéreuse, permettant de mesurer sans contact la résistance aérodynamique d'un objet ou d'une personne, tel qu'un cycliste en mouvement, sans que ledit objet ou ladite personne ne se déplace par rapport au sol. On entend par personne en mouvement une personne ayant d'une part un mouvement de déplacement par rapport à un fluide tel que l'air par exemple, et d'autre part un mouvement propre, dans le cas du cycliste un mouvement de pédalage.

A cet effet et conformément à l'invention, il est proposé un procédé de détermination de la résistance aérodynamique d'un objet ou d'une personne ayant un mouvement propre remarquable en ce qu'il comporte au moins les étapes suivantes de :

- acquisition entre deux instants $t_{init}$ et $t_{fin}$ de nuages de points 3D correspondant aux positions dans l'espace de différents points positionnés en différents endroits de l'objet ou de la personne,
- détermination de modèles 3D en fonction du temps, pour chaque instant entre $t_{init}$ et $t_{fin}$, à partir des points des nuages de points acquis à chaque instant entre les instants $t_{init}$ et $t_{fin}$,
- simulation numérique du déplacement des solides décrits par les nuages de points correspondant à l'objet ou à la personne dans un fluide, pour chaque instant entre les instants $t_{init}$ et $t_{fin}$ , ladite simulation étant notamment paramétrée par la direction et la vitesse de déplacement du fluide par rapport au solide représentées par un vecteur D,
- calcul de la moyenne des forces de résistance aérodynamique exercée sur l'objet ou la personne en mouvement entre lesdits instants $t_{init}$ et $t_{fin}$ à partir de ladite simulation numérique du déplacement des solides.

De préférence, ladite étape d'acquisition de nuages de points consiste au moins dans les étapes suivantes de :

- projection d'un motif, tel qu'un Moiré par exemple, sur l'objet ou la personne,
- acquisition de plusieurs images du motif projeté entre les instants $t_{init}$ et $t_{fin}$,
- calcul par triangulation et enregistrement de la position de points appartenant au motif, entre les instants $t_{init}$ et $t_{fin}$.

Par ailleurs, l'étape de détermination de modèles 3D en fonction du temps à partir des points des nuages de points acquis à chaque instant entre les instants $t_{init}$ et $t_{fin}$ consiste au moins dans les étapes suivantes de :

- application d'au moins un prétraitement des données relatives aux ensembles de nuages de points enregistrés,
- détermination d'un maillage à partir des données relatives aux ensembles de nuages de points enregistrés et traités.

Ladite étape de prétraitement des données relatives aux ensembles de points enregistrés consiste au moins dans une étape de filtrage des points aberrants et/ou de filtrage du bruit et/ou de lissage spatio-temporel.

De plus, l'étape de simulation du déplacement des solides décrits par les nuages de points correspondant à l'objet ou à la personne dans un fluide, pour chaque instant entre les instants $t_{init}$ et $t_{fin}$, consiste au moins dans les étapes suivantes de :

- décomposition, dans une base orthogonale (i,j,k), du vecteur D correspondant au déplacement relatif du solide dans le fluide comme la différence entre le vecteur V correspondant au vecteur caractéristique du mouvement du fluide et le vecteur C correspondant au vecteur caractéristique du mouvement de l'objet ou de la personne,
- détermination du vecteur D en fonction de C, Vx, Vy et Vz, avec C la vitesse de l'objet ou de la personne en considérant que le mouvement de l'objet ou de la personne est réalisé suivant l'axe i, Vx la vitesse du vent selon l'axe i, Vy la vitesse du vent selon l'axe j et Vz la vitesse du vent selon l'axe k,
- détermination de la loi de probabilité jointe aux variables C, Vx, Vy et Vz, lesdites variables étant considérées comme des variables aléatoires non-indépendantes, correspondant à la densité P(C,Vx,Vy,Vz).

Ladite moyenne des forces de résistance aérodynamique est déterminée en calculant l'intégrale quadruple du produit de la densité P(C,Vx,Vy,Vz) et des forces de résistance aérodynamique exercées sur l'objet ou la personne F(D(C,Vx,Vy,Vz)).

De manière avantageuse, la moyenne des forces de résistance aérodynamique peut être calculée en considérant que :

- l'écoulement du fluide est parallèle au plan horizontal, i.e que la composante Vx est nulle, et/ou
- la force du vent V ne dépend pas de sa direction, et/ou
- la vitesse de l'objet ou de la personne ayant un mouvement propre ne dépend pas de la force V du vent ni de sa direction, et/ou
- le mouvement propre de l'objet ou de la personne est symétrique par rapport à l'axe défini par i, et/ou
- les nuages de points sont enregistrés dans un intervalle de temps égal à la période du mouvement propre de l'objet ou de la personne.

Un autre objet de l'invention concerne un système de détermination de la résistance aérodynamique d'un objet ou d'une personne ayant un mouvement propre remarquable en ce qu'il comporte au moins :

- des moyens d'acquisition entre deux instants $t_{init}$ et $t_{fin}$ de nuages de points 3D correspondant à la position dans l'espace de différents points positionnés en différents endroits de l'objet ou de la personne,
- des moyens de détermination de modèles 3D en fonction du temps, pour chaque instant entre $t_{init}$ et $t_{fin}$, à partir des points des nuages de points acquis à chaque instant entre $t_{init}$ et $t_{fin}$,
- des moyens de simulation numérique du déplacement des solides décrits par les nuages de points correspondant à l'objet ou la personne dans un fluide, pour chaque instant entre les instants $t_{init}$ et $t_{fin}$ , ladite simulation étant notamment paramétrée par la direction et la vitesse de déplacement du fluide par rapport au solide représentées par un vecteur D,
- des moyens de calcul de la moyenne des forces de résistance aérodynamique exercée sur l'objet ou la personne en mouvement entre lesdits instants $t_{init}$ et $t_{fin}$ à partir de ladite simulation numérique du déplacement des solides.

De préférence, lesdits moyens d'acquisition de nuages de points comprennent au moins :

- des moyens de projection d'un motif, tel qu'un Moiré par exemple, sur l'objet ou la personne,
- des moyens d'acquisition de plusieurs images du motif projeté entre les instants $t_{init}$ et $t_{fin}$,
- des moyens de calcul par triangulation et d'enregistrement de la position de points appartenant au motif, entre les instants $t_{init}$ et $t_{fin}$.

Lesdits moyens de détermination de modèles 3D en fonction du temps à partir des points des nuages de points acquis à chaque instant entre les instants $t_{init}$ et $t_{fin}$ comprennent au moins :

- des moyens de prétraitement des données relatives aux ensembles de nuages de points enregistrés,
- des moyens de détermination d'un maillage à partir des données relatives aux ensembles de nuages de points enregistrés et traités.

Par ailleurs, les moyens de prétraitement des données relatives aux ensembles de points enregistrés consistent au moins dans un filtre des points aberrants et/ou un filtre du bruit et/ou des moyens de lissage spatio-temporel.

Lesdits moyens de simulation du déplacement des solides formés par les nuages de points correspondant à l'objet ou à la personne dans un fluide, pour chaque instant entre les instants $t_{init}$ et $t_{fin}$, comprennent au moins :

- des moyens de décomposition, dans une base orthogonale (i,j,k), du vecteur D correspondant au déplacement relatif du solide dans le fluide comme la différence entre le vecteur V correspondant au vecteur caractéristique du mouvement du fluide et le vecteur C correspondant au vecteur caractéristique du mouvement de l'objet ou de la personne,

- des moyens de détermination du vecteur D en fonction de C, Vx, Vy et Vz, avec C la vitesse de l'objet ou de la personne, en considérant que le mouvement de l'objet ou de la personne est réalisé suivant l'axe i, Vx la vitesse du vent selon l'axe i, Vy la vitesse du vent selon l'axe j et Vz la vitesse du vent selon l'axe k,
- des moyens de détermination de la loi de probabilité jointe aux variables C, Vx, Vy et Vz, lesdites variables étant considérées comme des variables aléatoires non-indépendantes, correspondant à la densité P(C,Vx,Vy,Vz).

Ladite moyenne des forces de résistance aérodynamique est déterminée en calculant l'intégrale quadruple du produit de la densite P(C,Vx,Vy,Vz) et des forces de résistance aérodynamique exercées sur l'objet ou la personne F(D(C,Vx,Vy,Vz)).

La fonction F est obtenue par simulation numérique. Cette simulation numérique consiste à simuler un écoulement d'air autour de l'objet en mouvement, dont la direction est définie par le paramètre D. Cette simulation permet ainsi de mesurer virtuellement les forces de résistance aérodynamique exercées sur l'objet en mouvement. Ladite simulation numérique s'appuie sur les équations de Navier-Stokes. Pour de meilleurs résultats, ladite simulation peut utiliser les équations Reynolds-Averaged Navier-Stokes (RANS) et plus particulièrement le modèle SST (Shear-Stress Transport), présenté dans Menter, F. R. (August 1994), "Two-Equation Eddy-Viscosity Turbulence Models for Engineering Applications", AIAA Journal 32 (8): 1598-1605.

Par ailleurs, la moyenne des forces de résistance aérodynamique peut être calculée en considérant que :

- l'écoulement du fluide est parallèle au plan horizontal, i.e que la composante Vx est nulle, et/ou
- la force du vent V ne dépend pas de sa direction, et/ou
- la vitesse de l'objet ou de la personne ayant un mouvement propre ne dépend pas de la force V du vent ni de sa direction, et/ou
- le mouvement propre de l'objet ou de la personne est symétrique par rapport à l'axe défini par i, et/ou
- les nuages de points sont enregistrés dans un intervalle de temps égal à la période du mouvement propre de l'objet ou de la personne.

## Brève description des dessins

D'autres avantages et caractéristiques ressortiront mieux de la description qui va suivre, de plusieurs variantes d'exécution, données à titre d'exemples non limitatifs, du procédé de détermination de la résistance aérodynamique d'un objet ou d'une personne en mouvement suivant l'invention, à partir des dessins annexés sur lesquels :

- la figure 1 est une représentation schématique des différentes étapes du procédé suivant l'invention,
- la figure 2 est une représentation schématique d'un système d'acquisition de nuages de points 3D correspondant à la position de points sur la surface du solide en mouvement pour la mise en œuvre du procédé suivant l'invention.

## Mode de réalisation de l'invention

On décrira ci-après un procédé et un système de détermination de la résistance aérodynamique d'un cycliste pédalant sur un vélo, ledit cycliste ayant un mouvement propre, à savoir son mouvement de pédalage ; Toutefois, il est bien évident que le procédé et le système pourront être adaptés à tout objet ou toute personne ayant un mouvement propre sans pour autant sortir du cadre de l'invention.

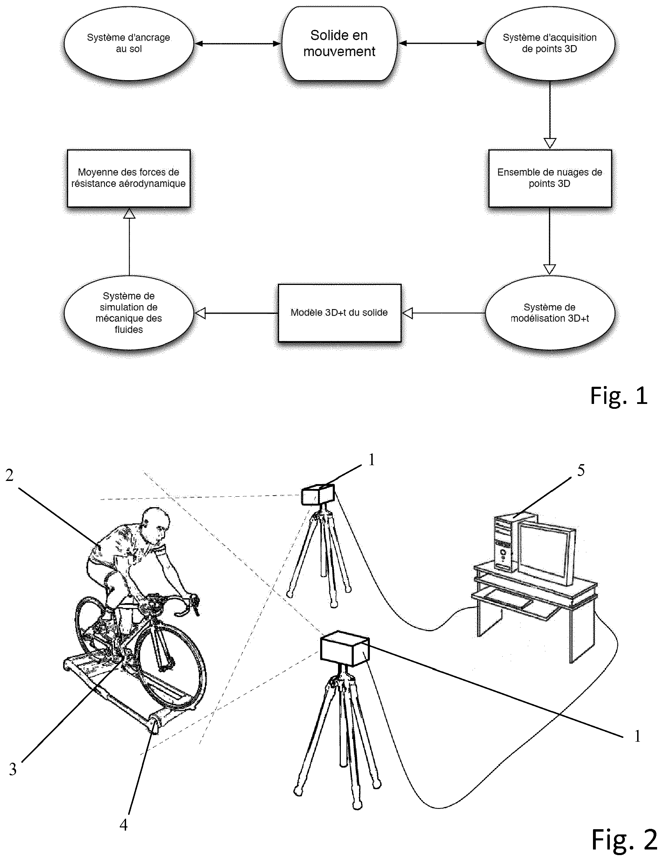

En référence à la figure 1, le système suivant l'invention permettant de mesurer sans contact et sans déplacement la résistance aérodynamique d'un solide en mouvement comporte plusieurs sous-systèmes qui interagissent. Plus particulièrement, il comporte un système permettant d'étudier le mouvement du solide sans que celui-ci ne se déplace par rapport au sol. Ainsi, suivant l'invention, la mesure de l'aérodynamisme ne nécessite pas un mouvement réel du solide étudié par rapport au sol. Par ailleurs, cette mesure prend en compte l'aspect dynamique du mouvement du solide. Il est donc nécessaire de placer le solide étudié dans des conditions permettant un mouvement sans contrainte mais sans déplacement par rapport au sol. Dans l'application particulière de la détermination de la résistance aérodynamique d'un cycliste pédalant sur un vélo, ledit système consiste par exemple en un home trainer à rouleaux ou similaire.

Par ailleurs, l'invention comporte également un système permettant de mesurer au cours du temps des nuages de points 3D correspondant à la position de points sur la surface du solide en mouvement, un système permettant d'obtenir un modèle 3D+t correct du solide en mouvement auquel on s'intéresse et un système permettant de simuler le déplacement du solide en mouvement dans un fluide et de mesurer les forces exercées sur ce solide.

Ledit système permettant de mesurer au cours du temps des nuages de points 3D correspondant à la position de points sur la surface du solide en mouvement est constitué d'un ensemble de capteurs 3D sans contact classiques tels que des caméras à temps de vol, des caméras stéréoscopiques, des caméras à projection de motifs, ou similaires placés de façon judicieuse de manière à obtenir un ensemble de points 3D décrivant entièrement le solide, en l'occurrence le cycliste, étudié à un temps t. Ce système est capable d'acquérir des nuages de points 3D à une cadence compatible avec la dynamique du mouvement étudié. On obtient ainsi un ensemble de nuages de points 3D représentant le solide à différents temps t.

En référence à la figure 2, ledit système permettant de mesurer au cours du temps des nuages de points 3D correspondant à la position de points sur la surface du solide en mouvement est constitué, par exemple, de caméras 1 projetant des motifs sur un cycliste 2 pédalant sur un vélo 3 positionné sur un home-trainer à rouleaux 4. Lesdites caméras 1 comportent également des capteurs CCD aptes à enregistrées les motifs projetés par les caméras et réfléchis par le cycliste 2. Ces caméras 1 sont connectées à une unité de traitement 5, qui consiste par exemple en un ordinateur de bureau dit PC ou similaire, dans laquelle les données correspondant aux nuages de point sont enregistrées puis traitées par un programme d'ordinateur exécutant les différentes étapes du système conforme à l'invention.

Ledit système permettant d'obtenir un modèle 3D+t correct du solide en mouvement permet de traiter l'ensemble de nuages de points 3D afin d'obtenir un modèle 3D+t du solide en mouvement. Pour cela, un ensemble de pré-traitements sont appliqués à ces nuages de points : filtrage des points aberrants, filtrage du bruit, lissage spatio-temporel... Enfin une opération de maillage est appliquée afin d'obtenir un modèle 3D+t exploitable par le système de simulation de mécanique des fluides.

Le système permettant de simuler le déplacement du solide en mouvement dans un fluide et de mesurer les forces exercées sur le cycliste met en œuvre des méthodes de mécanique des fluides numérique classiques afin de simuler le déplacement du solide étudié dans un fluide (de l'air dans le cas du cycliste). Cette simulation est notamment paramétrée par la direction et la vitesse de déplacement du fluide par rapport au solide, représentées par le vecteur D. Elle permet in fine de calculer la moyenne F(D) des forces de résistance aérodynamique exercées sur le solide pendant toute la séquence de mouvement enregistrée par les capteurs.

Dans la mesure où l'on cherche à étudier l'aérodynamisme dans des conditions réelles (comme par exemple celles d'une pratique du cyclisme en extérieur), il est important de prendre en compte le fait que la vitesse relative du solide par rapport au fluide peut changer au cours du temps. A cet effet, le procédé suivant l'invention propose de modéliser les différentes variables du mouvement par des lois de probabilité permettant de décrire un environnement donné (par exemple un parcours cycliste particulier).

Pour ce faire, on munit l'espace d'une base orthonormale (i;j;k) telle que le solide étudié se déplace selon l'axe défini par i et que le sol est parallèle au plan défini par i et j par exemple.

On peut alors décomposer le vecteur D, déplacement relatif du solide dans le fluide de la manière suivante :

$$\vec{D} = \vec{V} - \vec{C}$$

où V désigne le vecteur caractéristique du vent et C désigne le vecteur caractéristique du mouvement du cycliste.

On peut écrire ensuite :

$$\vec{D} = V_x\vec{i} + V_y\vec{j} + V_z\vec{k} - C\vec{i}$$

$$\vec{D} = (V_x - C)\vec{i} + V_y\vec{j} + V_z\vec{k}$$

On peut donc écrire D comme une fonction de C, Vx, Vy et Vz, où C désigne la vitesse du solide, Vx désigne la vitesse du vent selon l'axe i, Vy désigne la vitesse du vent selon l'axe j, et Vz désigne la vitesse du vent selon l'axe k.

On considère ensuite les variables C, Vx, Vy et Vz comme des variables aléatoires non indépendantes dont la loi de probabilité jointe est donnée par la densité P(C; Vx; Vy; Vz), cette loi de probabilité permettant de décrire statistiquement l'environnement particulier étudié.

En considérant d'une part que la cinétique du mouvement étudié est très rapide par rapport aux changements de conditions (c'est-à-dire à une évolution des variables C, Vx, Vy et Vz) et d'autre part que la séquence de mouvement n'est pas influencée par les variables C, Vx, Vy et Vz, on peut alors calculer une moyenne $F_m$ des forces de résistance aérodynamique F exercées sur le solide dans l'environnement étudié de la manière suivante :

$$F_m = \iiint P(C, V_x, V_y, V_z) \, F(\vec{D}(C, V_x, V_y, V_z)) \, dC \, dV_x \, dV_y \, dV_z$$

F est obtenu par simulation numérique. Cette simulation numérique consiste à simuler un écoulement d'air autour de l'objet en mouvement, dont la direction est définie par le paramètre D. Cette simulation permet ainsi de mesurer virtuellement les forces de résistance aérodynamique exercées sur l'objet en mouvement. Ladite simulation numérique s'appuie sur les équations de Navier-Stokes. Pour de meilleurs résultats, ladite simulation peut utiliser les équations Reynolds-Averaged Navier-Stokes (RANS) et plus particulièrement le modèle SST (Shear-Stress Transport), présenté dans Menter, F. R. (August 1994), "Two-Equation Eddy-Viscosity Turbulence Models for Engineering Applications", AIAA Journal 32 (8): 1598-1605.

Il est bien évident que la mesure virtuelle des forces de résistance aérodynamique pourra être réalisée par toute autre méthode bien connue de l'homme du métier, notamment à partir d'un calcul direct en fonction des mesures permettant la détermination du modèle 3D de l'objet en mouvement, sans pour autant sortir du cadre de l'invention.

Le modèle est simulé en utilisant une méthode numérique (méthode des éléments finis, méthode des volumes finis, méthodes des différences finies, méthode spectrale ...) mise en œuvre sur un ordinateur.

Afin de rendre le modèle précédemment décrit plus facilement exploitable par un ordinateur, ce dernier est avantageusement discrétisé et simplifié.

Dans le cas particulier de l'étude de l'aérodynamisme d'un cycliste, on peut apporter les simplifications suivantes :

Vent parallèle à la route

On peut considérer que le vent est parallèle à la route, soit :

$V_z = 0$

Direction et force du vent indépendante

On peut exprimer Vx et Vy en fonction de la force V du vent et de l'angle du vent par rapport à l'axe défini par i :

$V_x = V\cos\alpha$
$V_y = V\sin\alpha$

On peut considérer que la force V du vent ne dépend pas de sa direction $\alpha$ et inversement

Vitesse du cycliste et vent indépendants

On peut considérer que la vitesse C du cycliste ne dépend pas de la force V du vent ni de sa direction a.

Ainsi, En utilisant les trois simplifications précédentes, on peut réécrire la loi de probabilité jointe sous la forme simplifiée suivante :

$$P(C, V_x, V_y, V_z) = P_C(C)P_V(V)P_\alpha(\alpha)$$

L'indépendance des variables aléatoires permet d'exprimer la loi jointe comme le produit des lois marginales associées à chacune d'elles. Ces lois peuvent être définies beaucoup plus simplement que la loi jointe. Par exemple, $P_V$ est classiquement définie comme la densité de probabilité associée à une loi de Weibull ; $P_\alpha$ est définie comme la densité de probabilité associée à une loi uniforme ; et $P_C$ a un profil dépendant spécifiquement du type d'épreuve cycliste étudié (sprint, course à étape, etc...).

Il est donc possible de réécrire la fonction F, correspondant aux forces de résistance aérodynamique exercées sur le solide dans l'environnement étudié, sous la forme suivante :

$$F(\vec{D}) = F(\vec{D}(C, V_x, V_y, V_z))$$

Et compte tenu des simplifications, nous pouvons écrire :

$$F(\vec{D}(C, V_x, V_y, V_z)) = F(\vec{D}(C, V\cos\alpha, V\sin\alpha, 0)) = F(C, V, \alpha)$$

Afin de limiter le nombre de simulations et de discrétiser le modèle, on peut considérer que le cycliste et son mouvement sont symétriques par rapport à l'axe défini pari. On a alors :

$$F(\vec{D}(C,V,\alpha)) = F(\vec{D}(C,V,-\alpha))$$

Ainsi, on peut se contenter de faire varier $\alpha$ de 0 à $\pi$ lors des simulations.

Par ailleurs, on peut également considérer que le mouvement du cycliste est périodique (de période le temps d'un tour de pédale). On peut donc se contenter d'enregistrer une séquence de mouvement de durée égale à cette période.

Pour discrétiser le modèle, on choisit dans un premier temps d'une part $C_{max}$ et $V_{max}$ et d'autre part $S_C$, $S_V$ et $S_\alpha$ tels que $S_C$ divise $C_{max}$, $S_V$ divise $V_{max}$ et $S_\alpha = \pi/k$ avec k entier.

On a alors :

$$n_C = \frac{C_{max}}{S_C}$$

$$n_V = \frac{V_{max}}{S_V}$$

$$n_\alpha = \frac{\pi}{S_\alpha}$$

On peut alors approximer $F_m$ de la manière suivante :

$$F_m = 2 \sum_{i=1}^{n_C} \sum_{j=1}^{n_V} \sum_{k=1}^{n_\alpha} \int_{(i-1)S_C}^{iS_C} P_C(x)dx \int_{(j-1)S_V}^{jS_V} P_V(y)dy \int_{(k-1)S_\alpha}^{kS_\alpha} P_\alpha(z)dz \; F(i,j,k)$$

avec

$$F(i,j,k) = F(\vec{D}((i-\tfrac{1}{2})S_C, (j-\tfrac{1}{2})S_V, (k-\tfrac{1}{2})S_\alpha)$$

De cette manière, le modèle nécessite seulement $n = n_C n_V n_\alpha$ simulations.

**Revendications**

1. Procédé de détermination de la résistance aérodynamique d'un objet ou d'une personne ayant un mouvement propre *caractérisé* **en ce qu'**il comporte au moins les étapes suivantes de :

   - acquisition entre deux instants $t_{init}$ et $t_{fin}$ de nuages de points 3D correspondant aux positions dans l'espace de différents points positionnés en différents endroits de l'objet ou de la personne,
   - détermination de modèles 3D en fonction du temps, pour chaque instant entre tinit et $t_{fin}$, à partir des points des nuages de points acquis à chaque instant entre les instants $t_{init}$ et $t_{fin}$,
   - simulation numérique du déplacement des solides décrits par les nuages de points correspondant à l'objet ou à la personne dans un fluide, pour chaque instant entre les instants $t_{init}$ et $t_{fin}$, ladite simulation étant notamment paramétrée par la direction et la vitesse de déplacement du fluide par rapport au solide représentées par un vecteur D,
   - calcul de la moyenne des forces de résistance aérodynamique exercée sur l'objet ou la personne entre lesdits instants $t_{init}$ et $t_{fin}$, à partir de ladite simulation numérique du déplacement des solides.

2. Procédé suivant la revendication 1 *caractérisé* **en ce que** l'étape d'acquisition de nuages de points consistent au moins dans les étapes suivantes de :

   - projection d'un motif, tel qu'un Moiré par exemple, sur l'objet ou la personne,
   - acquisition de plusieurs images du motif projeté entre les instants $t_{init}$ et $t_{fin}$,
   - calcul par triangulation et enregistrement de la position de points appartenant au motif, entre les instants $t_{init}$ et $t_{fin}$.

3. Procédé suivant l'une quelconque des revendications 1 ou 2 *caractérisé* **en ce que** l'étape de détermination des modèles 3D en fonction du temps à partir des points des nuages de points acquis à chaque instant entre les instants $t_{init}$ et $t_{fin}$ consiste au moins dans les étapes suivantes de :

- application d'au moins un prétraitement des données relatives aux ensembles de nuages de points enregistrés,
- détermination d'un maillage à partir des données relatives aux ensembles de nuages de points enregistrés et traités.

4. Procédé suivant la revendication 3 *caractérisé* **en ce que** l'étape de prétraitement des données relatives aux ensembles de points enregistrés consiste au moins dans une étape de filtrage des points aberrants et/ou de filtrage du bruit et/ou de lissage spatio-temporel.

5. Procédé suivant l'une quelconque des revendications 1 à 4 *caractérisé* **en ce que** l'étape de simulation du déplacement des solides décrits par les nuages de points correspondant à l'objet ou à la personne dans un fluide, pour chaque instant entre les instants $t_{init}$ et $t_{fin}$, consiste au moins dans les étapes suivantes de :

- décomposition, dans une base orthogonale (i,j,k), du vecteur D correspondant au déplacement relatif du solide dans le fluide comme la différence entre le vecteur V correspondant au vecteur caractéristique du mouvement du fluide et le vecteur C correspondant au vecteur caractéristique du mouvement de l'objet ou de la personne,
- détermination du vecteur D en fonction de C, Vx, Vy et Vz, avec C la vitesse de l'objet ou de la personne en considérant que le mouvement de l'objet ou de la personne est réalisé suivant l'axe i, Vx la vitesse du vent selon l'axe i, Vy la vitesse du vent selon l'axe j et Vz la vitesse du vent selon l'axe k,
- détermination de la loi de probabilité jointe aux variables C, Vx, Vy et Vz, lesdites variables étant considérées comme des variables aléatoires non-indépendantes, correspondant à la densité P(C,Vx,Vy,Vz).

6. Procédé selon les revendications 1 et 5 *caractérisé* **en ce que** la moyenne des forces de résistance aérodynamique est déterminé en calculant l'intégrale quadruple du produit de la densité P(C,Vx,Vy,Vz) et des forces de résistance aérodynamique exercée sur l'objet ou la personne F(D(C,Vx,Vy,Vz)).

7. Procédé selon la revendication 5 *caractérisé* **en ce que** les forces de résistances aérodynamique F(D(C,Vx,Vy,Vz)) sont déterminées par simulation numérique utilisant les équations de Navier-Stokes et/ou les équations Reynolds-Averaged Navier-Stokes (RANS), et de préférence le modèle dit SST selon l'acronyme anglo-saxon Shear-Stress Transport).

8. Système de détermination de la résistance aérodynamique d'un objet ou d'une personne ayant un mouvement propre *caractérisé* **en ce qu'**il comporte au moins :

- des moyens d'acquisition entre deux instants $t_{init}$ et $t_{fin}$ de nuages de points 3D correspondant à la position dans l'espace de différents points positionnés en différents endroits de l'objet ou de la personne,
- des moyens de détermination de modèles 3D en fonction du temps, pour chaque instant entre $t_{init}$ et $t_{fin}$, à partir des points des nuages de points acquis à chaque instant entre $t_{init}$ et $t_{fin}$,
- des moyens de simulation numérique du déplacement des solides formés par les nuages de points correspondant à l'objet ou la personne dans un fluide, pour chaque instant entre les instants $t_{init}$ et $t_{fin}$, ladite simulation étant notamment paramétrée par la direction et la vitesse de déplacement du fluide par rapport au solide représentées par un vecteur D,
- des moyens de calcul de la moyenne des forces de résistance aérodynamique exercée sur l'objet ou la personne en mouvement entre lesdits instants $t_{init}$ et $t_{fin}$, à partir de ladite simulation numérique du déplacement des solides.

9. Système suivant la revendication 8 *caractérisé* **en ce que** les moyens d'acquisition de nuages de points comprennent au moins :

- des moyens de projection d'un motif, tel qu'un Moiré par exemple, sur l'objet ou la personne,
- des moyens d'acquisition de plusieurs images du motif projeté entre les instants tinit et $t_{fin}$,
- des moyens de calcul par triangulation et d'enregistrement de la position de points appartenant au motif, entre les instants $t_{init}$ et $t_{fin}$.

10. Système suivant l'une quelconque des revendications 8 ou 9 *caractérisé* **en ce que** lesdits moyens de détermination de modèles 3D en fonction du temps à partir des points des nuages de points acquis à chaque instant entre les instants tinit et $t_{fin}$ comprennent au moins :

- des moyens de prétraitement des données relatives aux ensembles de nuages de points enregistrés,
- des moyens de détermination d'un maillage à partir des données relatives aux ensembles de nuages de points enregistrés et traités

**11.** Système suivant la revendication 10 *caractérisé* **en ce que** les moyens de prétraitement des données relatives aux ensembles de points enregistrés consistent au moins dans un filtre des points aberrants et/ou un filtre du bruit et/ou des moyens de lissage spatio-temporel.

**12.** Système suivant l'une quelconque des revendications 8 à 11 *caractérisé* **en ce que** lesdits moyens de simulation du déplacement des solides formés par les nuages de points correspondant à l'objet ou à la personne dans un fluide, pour chaque instant entre les instants $t_{init}$ et $t_{fin}$, comprennent au moins :

- des moyens de décomposition, dans une base orthogonale (i,j,k), du vecteur D correspondant au déplacement relatif du solide dans le fluide comme la différence entre le vecteur V correspondant au vecteur caractéristique du mouvement du fluide et le vecteur C correspondant au vecteur caractéristique du mouvement de l'objet ou de la personne,
- des moyens de détermination du vecteur D en fonction de C, Vx, Vy et Vz, avec C la vitesse de l'objet ou de la personne, en considérant que le mouvement de l'objet ou de la personne est réalisé suivant l'axe i, Vx la vitesse du vent selon l'axe i, Vy la vitesse du vent selon l'axe j et Vz la vitesse du vent selon l'axe k,
des moyens de détermination de la loi de probabilité jointe aux variables C, Vx, Vy et Vz, lesdites variables étant considérées comme des variables aléatoires non-indépendantes, correspondant à la densité P(C,Vx,Vy,Vz).

**13.** Système selon les revendications 8 et 12 *caractérisé* **en ce que** la moyenne $F_m$ des forces de résistance aérodynamique est déterminée en calculant l'intégrale quadruple du produit de la densité P(C,Vx,Vy,Vz) et des forces de résistance aérodynamique exercées sur l'objet ou la personne F(D(C,Vx,Vy,Vz)).

**14.** Système selon la revendication 13 *caractérisé* **en ce que** les forces de résistances aérodynamique F(D(C,Vx,Vy,Vz)) sont déterminées par simulation numérique utilisant les équations de Navier-Stokes et/ou les équations Reynolds-Averaged Navier-Stokes (RANS), et de préférence le modèle dit SST selon l'acronyme anglo-saxon Shear-Stress Transport).

**15.** Application du procédé suivant l'une quelconque des revendications 1 à 7 à la détermination de la résistance aérodynamique d'un cycliste ayant un mouvement propre de pédalage sur un vélo.

**Patentansprüche**

**1.** Verfahren zur Bestimmung des aerodynamischen Widerstands eines Objekts oder einer Person, die eine Eigenbewegung aufweist, **dadurch gekennzeichnet, dass** es mindestens die folgenden Schritte beinhaltet zum:

- Erfassen zwischen zwei Zeitpunkten $t_{init}$ und $t_{fin}$ von 3D Punktwolken entsprechend den Positionen im Raum von verschiedenen Punkten, die an verschiedenen Stellen des Objekts oder der Person positioniert sind,
- Bestimmen von 3D Modellen in Abhängigkeit von der Zeit für jeden Zeitpunkt zwischen $t_{init}$ und $t_{fin}$, ausgehend von den Punkten der Punktwolken, die zu jedem Zeitpunkt zwischen den Zeitpunkten $t_{init}$ und $t_{fin}$ erfasst werden,
- digitalen Simulieren der Verschiebung der Festkörper, die durch die Punktwolken entsprechend dem Objekt oder der Person beschrieben werden, in einem Fluid für jeden Zeitpunkt zwischen den Zeitpunkten $t_{init}$ und $t_{fin}$, wobei die Simulation insbesondere durch die Verschiebungsrichtung und -geschwindigkeit des Fluids in Bezug auf den Festkörper parametriert wird, die durch einen Vektor D dargestellt werden,
- Berechnen des Mittelwerts der aerodynamischen Widerstandskräfte, der auf das Objekt oder die Person zwischen den Zeitpunkten $t_{init}$ und $t_{fin}$ ausgeübt wird, ausgehend von der digitalen Simulation der Verschiebung der Festkörper.

**2.** Verfahren nach Anspruch 1, **dadurch gekennzeichnet, dass** der Schritt des Erfassens von Punktwolken mindestens aus den folgenden Schritten besteht zum:

- Projizieren eines Motivs, wie beispielsweise eines Moires auf das Objekt oder die Person,
- Erfassen mehrerer Bilder des zwischen den Zeitpunkten $t_{init}$ und $t_{fin}$ projizierten Motivs,
- Berechnen, durch Triangulation und Speicherung der Position von zwischen den Zeitpunkten $t_{init}$ und $t_{fin}$ in dem Motiv aufscheinenden Punkten.

3. Verfahren nach einem der Ansprüche 1 oder 2, **dadurch gekennzeichnet, dass** der Schritt des Bestimmens der 3D Modelle in Abhängigkeit von der Zeit, ausgehend von den Punkten der Punktwolken, die zu jedem Zeitpunkt zwischen den Zeitpunkten $t_{init}$ und $t_{fin}$ erfasst werden, mindestens aus den folgenden Schritten besteht, zum:

- Anwenden mindestens einer Vorverarbeitung der Daten in Bezug auf die gespeicherten Punktwolkeneinheiten,
- Bestimmen eines Netzes ausgehend von den Daten in Bezug auf die gespeicherten und verarbeiteten Punktwolkeneinheiten.

4. Verfahren nach Anspruch 3, **dadurch gekennzeichnet, dass** der Schritt zur Vorverarbeitung der Daten in Bezug auf die gespeicherten Punkteinheiten mindestens aus einem Schritt zum Filtern der abwegigen Punkte und/oder zum Rauschfiltern und/oder der Raum-Zeit-Glättung besteht.

5. Verfahren nach einem der Ansprüche 1 bis 4, **dadurch gekennzeichnet, dass** der Schritt des Simulierens der Verschiebung der Festkörper, die durch die Punktwolken entsprechend dem Objekt oder der Person beschrieben werden, in einem Fluid für jeden Zeitpunkt zwischen den Zeitpunkten $t_{init}$ und $t_{fin}$ mindestens aus den folgenden Schritten besteht, zum:

- Aufspalten, in einer orthogonalen Basis (i, j, k) des Vektors D entsprechend der relativen Verschiebung des Festkörpers in dem Fluid als die Differenz zwischen dem Vektor V entsprechend dem Merkmalsvektor der Bewegung des Fluids und dem Vektor C entsprechend dem Merkmalsvektor der Bewegung des Objekts oder der Person,
- Bestimmen des Vektors D in Abhängigkeit von C, Vx, Vy und Vz, mit C als Geschwindigkeit des Objekts oder der Person unter der Annahme, dass die Bewegung des Objekts oder der Person entlang der Achse i erfolgt, Vx als Geschwindigkeit des Windes entlang der Achse i, Vy als Geschwindigkeit des Windes entlang der Achse j, und Vz als Geschwindigkeit des Windes entlang der Achse k,
- Bestimmen des den Variablen C, Vx, Vy und Vz beigefügten Wahrscheinlichkeitsgesetzes, wobei die Variablen als nicht unabhängige Zufallsvariablen angenommen werden, die der Dichte P(C, Vx, Vy, Vz) entsprechen.

6. Verfahren nach den Ansprüchen 1 und 5, **dadurch gekennzeichnet, dass** der Mittelwert der aerodynamischen Widerstandskräfte durch Berechnen des vierfachen Integrals des Produkts der Dichte P(C, Vx, Vy, Vz) und der aerodynamischen Widerstandskräfte, die auf das Objekt oder die Person F(D(C, Vx, Vy, Vz)) ausgeübt werden, bestimmt wird.

7. Verfahren nach Anspruch 5, **dadurch gekennzeichnet, dass** die aerodynamischen Widerstandskräfte F(D(C, Vx, Vy, Vz)) durch digitales Simulieren unter Verwendung von Navier-Stokes und/oder der Reynolds-Averaged Navier-Stokes- (RANS-)Gleichungen, und vorzugsweise das SST genannte Modell, gemäß der englischen Abkürzung für Shear-Stress-Transport bestimmt werden.

8. System zur Bestimmung des aerodynamischen Widerstands eines Objekts oder einer Person, die eine Eigenbewegung aufweist, **dadurch gekennzeichnet, dass** es mindestens umfasst:

- Mittel zum Erfassen zwischen zwei Zeitpunkten $t_{init}$ und $t_{fin}$ von 3D Punktwolken entsprechend den Positionen im Raum von verschiedenen Punkten, die an verschiedenen Stellen des Objekts oder der Person positioniert sind,
- Mittel zum Bestimmen von 3D Modellen in Abhängigkeit von der Zeit, für jeden Zeitpunkt zwischen $t_{init}$ und $t_{fin}$, ausgehend von den Punkten der Punktwolken, die zu jedem Zeitpunkt zwischen $t_{init}$ und $t_{fin}$ erfasst werden,
- Mittel zum digitalen Simulieren der Verschiebung der Festkörper, die durch die Punktwolken entsprechend dem Objekt oder der Person gebildet werden, in einem Fluid für jeden Zeitpunkt zwischen den Zeitpunkten $t_{init}$ und $t_{fin}$, wobei die Simulation insbesondere durch die Verschiebungsrichtung und -geschwindigkeit des Fluids in Bezug auf den Festkörper parametriert wird, die durch einen Vektor D dargestellt werden,
- Mittel zum Berechnen des Mittelwerts der aerodynamischen Widerstandskräfte, der auf das Objekt oder die Person zwischen den Zeitpunkten $t_{init}$ und $t_{fin}$ ausgeübt wird, ausgehend von der digitalen Simulation der Verschiebung der Festkörper.

9. System nach Anspruch 8, **dadurch gekennzeichnet, dass** die Mittel zum Erfassen von Punktwolken mindestens umfassen:

- Mittel zum Projizieren eines Motivs, wie beispielsweise eines Moires auf das Objekt oder die Person,
- Mittel zum Erfassen mehrerer Bilder des zwischen den Zeitpunkten $t_{init}$ und $t_{fin}$ projizierten Motivs,
- Mittel zum Berechnen durch Triangulation und zum Speichern der Position von dem Motiv angehörenden Punkten zwischen den Zeitpunkten $t_{init}$ und $t_{fin}$.

10. System nach einem der Ansprüche 8 oder 9, **dadurch gekennzeichnet, dass** die Mittel zum Bestimmen von 3D Modellen in Abhängigkeit von der Zeit ausgehend von den Punkten der Punktwolken, die zu jedem Zeitpunkt zwischen den Zeitpunkten $t_{init}$ und $t_{fin}$ erfasst werden, mindestens umfassen:

- Mittel zum Vorverarbeiten der Daten in Bezug auf die gespeicherten Punktwolkeneinheiten,
- Mittel zum Bestimmen eines Netzes ausgehend von den Daten in Bezug auf die gespeicherten und verarbeiteten Punktwolkeneinheiten.

11. System nach Anspruch 10, **dadurch gekennzeichnet, dass** die Mittel zum Vorverarbeiten der Daten in Bezug auf die gespeicherten Punkteinheiten mindestens aus einem Filter der abwegigen Punkte und/oder einem Rauschfilter und/oder Mitteln zur Raum-Zeit-Glättung bestehen.

12. System nach einem der Ansprüche 8 bis 11, **dadurch gekennzeichnet, dass** die Mittel zum Simulieren der Verschiebung der Festkörper, die durch die Punktwolken entsprechend dem Objekt oder der Person gebildet werden, in einem Fluid für jeden Zeitpunkt zwischen den Zeitpunkten $t_{init}$ und $t_{fin}$ mindestens umfassen:

- Mittel zum Aufspalten, in einer orthogonalen Basis (i, j, k) des Vektors D entsprechend der relativen Verschiebung des Festkörpers in dem Fluid als die Differenz zwischen dem Vektor V entsprechend dem Merkmalsvektor der Bewegung des Fluids und dem Vektor C entsprechend dem Merkmalsvektor der Bewegung des Objekts oder der Person,
- Mittel zum Bestimmen des Vektors D in Abhängigkeit von C, Vx, Vy und Vz, mit C als Geschwindigkeit des Objekts oder der Person unter der Annahme, dass die Bewegung des Objekts oder der Person entlang der Achse i erfolgt, Vx als Geschwindigkeit des Windes entlang der Achse i, Vy als Geschwindigkeit des Windes entlang der Achse j, und Vz als Geschwindigkeit des Windes entlang der Achse k,
- Mittel zum Bestimmen des den Variablen C, Vx, Vy und Vz beigefügten Wahrscheinlichkeitsgesetzes, wobei die Variablen als nicht unabhängige Zufallsvariablen angenommen werden, die der Dichte P(C, Vx, Vy, Vz) entsprechen.

13. System nach den Ansprüchen 8 und 12, **dadurch gekennzeichnet, dass** der Mittelwert $F_m$ der aerodynamischen Widerstandskräfte durch Berechnen des vierfachen Integrals des Produkts der Dichte P(C, Vx, Vy, Vz) und der aerodynamischen Widerstandskräfte, die auf das Objekt oder die Person F(D(C, Vx, Vy, Vz)) ausgeübt werden, bestimmt wird.

14. System nach Anspruch 13, **dadurch gekennzeichnet, dass** die aerodynamischen Widerstandskräfte F(D(C, Vx, Vy, Vz)) durch digitales Simulieren unter Verwendung von Navier-Stokes und/oder der Reynolds-Averaged Navier-Stokes- (RANS-)Gleichungen, und vorzugsweise das SST genannte Modell, gemäß der englischen Abkürzung für Shear-Stress-Transport bestimmt werden.

15. Anwenden des Verfahrens nach einem der Ansprüche 1 bis 7, auf die Bestimmung des aerodynamischen Widerstands eines Radfahrers, der eine Eigenbewegung einer Pedalbetätigung auf einem Fahrrad aufweist.

## Claims

1. A method for determining the aerodynamic resistance of an object or a person having its own movement **characterized in that** it includes at least the following steps of:

- acquiring between two instants $t_{init}$ and $t_{fin}$ of 3D clouds of dots corresponding to the positions in the space of different points positioned in different places of the object or the person,
- determining 3D models as a function of time, for each instant between $t_{init}$ and $t_{fin}$, from dots of the cloud of dots acquired at each instant between the instants $t_{init}$ and $t_{fin}$,
- numerical simulating the displacement of the solids described by the clouds of dots corresponding to the object or to the person in a fluid, for each instant between the instants $t_{init}$ and $t_{fin}$, said simulation being in particular parameterized by the direction and the speed of displacement of the fluid with respect to the solid represented by a vector D,
- calculating the average of the aerodynamic resistance forces exerted on the object or the person between said instants $t_{init}$ and $t_{fin}$, from said digital simulation of the displacement of solids.

2. The method according to claim 1, **characterized in that** the step of acquiring clouds of dots consists at least of the following steps of:

- projecting a pattern, such as a Moire for example, on the object or the person,
- acquiring several images of the pattern projected between the instants $t_{init}$ and $t_{fin}$,
- calculating by triangulation and recording the position of dots belonging to the pattern, between the instants $t_{init}$ and $t_{fin}$.

3. The method according to any one of claims 1 or 2 **characterized in that** the step of determining the 3D models as a function of time from dots of the clouds of dots acquired at each instant between the instants $t_{init}$ and $t_{fin}$ consists at least in the following steps of:

- applying at least one pre-processing of the data relative to the sets of recorded clouds of dots,
- determining a mesh from the data relative to the sets of recorded and processed clouds of dots.

4. The method according to claim 3 **characterized in that** the step of pre-processing the data relative to the recorded sets of dots consists at least in a step of filtering abnormal dots and/or filtering noise and/or spatio-temporal smoothing.

5. The method according to any one of claims 1 to 4, **characterized in that** the step of simulating the displacement of the solids described by the clouds of dots corresponding to the object or to the person in a fluid, for each instant between the instants $t_{init}$ and $t_{fin}$, consists at least in the following steps of:

- decomposing, in an orthogonal basis (i, j, k), the vector D corresponding to the relative displacement of the solid in the fluid as the difference between the vector V corresponding to the characteristic vector of the movement of the fluid and the vector C corresponding to the characteristic vector of the movement of the object or the person,
- determining the vector D as a function of C, Vx, Vy and Vz, with C the speed of the object or of the person by considering that the movement of the object or of the person is carried out along the axis i, Vx the wind speed along the axis i, Vy the wind speed along the axis j and Vz the wind speed along the axis k,
- determining the law of probability joined to the variables C, Vx, Vy and Vz, said variables being considered as non-independent random variables, corresponding to the density P (C, Vx, Vy, Vz).

6. The method according to claims 1 and 5 **characterized in that** the average of the aerodynamic resistance forces is determined by calculating the quadruple integral of the product of the density P(C, Vx, Vy, Vz) and the aerodynamic resistance forces exerted on the object or the person F(D (C, Vx, Vy, Vz)).

7. The method according to claim 5 **characterized in that** the aerodynamic resistance forces F(D (C, Vx, Vy, Vz)) are determined by numerical simulation using the Navier-Stokes equations and/or the Reynolds-Averaged Navier-Stokes equations (RANS), and preferably the so-called SST model according to the acronym Shear-Stress Transport).

8. A system for determining the aerodynamic resistance of an object or a person having its own movement **characterized in that** it includes at least:

- means for acquiring between two instants $t_{init}$ and $t_{fin}$ 3D clouds of dots corresponding to the position in space of different points positioned in different places of the object or the person,
- means for determining 3D models as a function of time, for each instant between $t_{init}$ and $t_{fin}$, from dots of the clouds of dots acquired at each instant between $t_{init}$ and $t_{fin}$,
- means for numerical simulating the displacement of the solids formed by the clouds of dots corresponding to the object or the person in a fluid, for each instant between the instants $t_{init}$ and $t_{fin}$, said simulation being in particular parameterized by the direction and the speed of displacement of the fluid relative to the solid represented by a vector D,

- means for calculating the average of the aerodynamic resistance forces exerted on the object or the person in movement between said instants $t_{init}$ and $t_{fin}$, from said digital simulation of the displacement of solids.

9. The system according to claim 8 **characterized in that** the means for acquiring clouds of dots comprise at least:

- means for projecting a pattern, such as a Moire for example, on the object or the person,
- means for acquiring several images of the pattern projected between the instants $t_{init}$ and $t_{fin}$,
- means for calculating by triangulation and recording the position of dots belonging to the pattern, between the instants $t_{init}$ and $t_{fin}$.

10. The system according to any one of claims 8 or 9 **characterized in that** said means for determining 3D models as a function of time from dots of the clouds of dots acquired at each instant between the instants $t_{init}$ and $t_{fin}$ comprise at least:

- means for pre-processing data relative to sets of recorded clouds of dots,
- means for determining a mesh from data relative to the sets of recorded and processed clouds of dots.

11. The system according to claim 10, **characterized in that** the means for pre-processing the data relative to the recorded sets of dots consist at least in a filter of abnormal dots and/or a noise filter and/or spatio-temporal smoothing means.

12. The system according to any one of claims 8 to 11 **characterized in that** said means for simulating the displacement of the solids formed by clouds of dots corresponding to the object or to the person in a fluid, for each instant between the instants $t_{init}$ and $t_{fin}$ comprise at least:

- means of decomposing, in an orthogonal basis (i, j, k), the vector D corresponding to the relative displacement of the solid in the fluid as the difference between the vector V corresponding to the characteristic vector of the movement of the fluid and the vector C corresponding to the characteristic vector of the movement of the object or the person,
- means for determining the vector D as a function of C, Vx, Vy and Vz, with C the speed of the object or of the person, by considering that the movement of the object or of the person is carried out along the axis i, Vx the wind speed along the axis i, Vy the wind speed along the axis j and Vz the wind speed along the axis k,
- means for determining the probability law attached to the variables C, Vx, Vy and Vz, said variables being considered as non-independent random variables, corresponding to the density P(C, Vx, Vy, Vz).

13. The system according to claims 8 and 12 **characterized in that** the average $F_m$ of the aerodynamic resistance forces is determined by calculating the quadruple integral of the product of the density P(C, Vx, Vy, Vz) and the aerodynamic resistance forces exerted on the object or the person F(D (C, Vx, Vy, Vz)).

14. The system according to claim 13 **characterized in that** the aerodynamic resistance forces F(D (C, Vx, Vy, Vz)) are determined by numerical simulation using the Navier-Stokes equations and/or the Reynolds-Averaged Navier-Stokes equations (RANS), and preferably the so-called SST model according to the acronym Shear-Stress Transport).

15. An application of the method according to any one of claims 1 to 7 to the determination of the aerodynamic resistance of a cyclist having an inherent pedaling movement on a bicycle.

Fig. 1

Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7997130 B
- US 2007095135 A

**Littérature non-brevet citée dans la description**

- Approche aérodynamique et biomécanique de l'amélioration des performances de cyclistes en course contre la montre. PhD thesis. Université de la Méditerranée, 2010
- Cyclisme et optimisation de la performance : sciences et méthodologie de l'entraînement. **F. GRAPPE.** Sciences et pratiques du sport. De Boeck, 2005
- **T. DEFRAEYE ; B. BLOCKEN ; E. KONINCKX ; P. HESPEL ; J. CARMELIET.** Aerodynamic study of différent cyclist positions : CFD analysis and full-scale wind-tunnel tests. *J Biomech,* Mai 2010, vol. 43 (7), 1262-1268
- Aerodynamic Analysis and Drag Coefficient Evaluation of Time-Trial Bicycle Riders. **PETER NICHOLAS DOVAL.** PhD thesis. University of Wisconsin-Milwaukee, 2012
- **MENTER, F. R.** Two-Equation Eddy-Viscosity Turbulence Models for Engineering Applications. *AIAA Journal,* Août 1994, vol. 32 (8), 1598-1605